(19) Europäisches Patentamt
European Patent Office
Office européen des brevets

(11) **EP 1 630 574 B1**

(12) **EUROPÄISCHE PATENTSCHRIFT**

(45) Veröffentlichungstag und Bekanntmachung des Hinweises auf die Patenterteilung:
**31.07.2013   Patentblatt 2013/31**

(51) Int Cl.:
*G01S 17/89* (2006.01)          *A01B 69/00* (2006.01)

(21) Anmeldenummer: **05025272.5**

(22) Anmeldetag: **31.03.1998**

(54) **Vorrichtung an Landmaschinen zur berührungslosen Abtastung von sich über dem Boden erstreckenden Konturen**

Device mounted on agricultural machines for contactless mapping of ground surface contours

Dispositif monté sur des machines agricoles destiné au balayage sans contact de contours sýétendant sur le sol

(84) Benannte Vertragsstaaten:
**BE DE DK FR GB IT**

(30) Priorität: **25.06.1997   DE 19726917**

(43) Veröffentlichungstag der Anmeldung:
**01.03.2006   Patentblatt 2006/09**

(62) Dokumentnummer(n) der früheren Anmeldung(en) nach Art. 76 EPÜ:
**98105831.6 / 0 887 660**

(73) Patentinhaber: **CLAAS Selbstfahrende Erntemaschinen GmbH**
**33428 Harsewinkel (DE)**

(72) Erfinder:
• **Diekhans, Norbert, Dr.**
**33335 Gütersloh (DE)**
• **Huster, Jochen**
**33330 Gütersloh (DE)**

(74) Vertreter: **Ellerbrächter, Dirk**
**c/o CLAAS KGaA mbH**
**Münsterstrasse 33**
**33428 Harsewinkel (DE)**

(56) Entgegenhaltungen:
EP-A- 0 732 045          DE-A- 4 318 798
GB-A- 2 308 256          US-A- 4 299 483
US-A- 5 612 883

EP 1 630 574 B1

**Beschreibung**

Die Erfindung bezieht sich auf eine Vorrichtung an Landmaschinen zur berührungslosen Abtastung von sich über dem Boden erstreckenden Konturen.

Eine derartige Vorrichtung ist aus dem Aufsatz "Schwadabtastung mit Ultraschall" (Zeitschrift: Landtechnik 5-93, Seite 266-268) bekannt. Die dort beschriebene Vorrichtung besteht aus mehreren auf einer Befestigungsleiste im Abstand von 40 cm zueinander angeordneten Ultraschallsensoren, die senkrecht auf den Boden gerichtet sind. Diese Befestigungsleiste wird zum Beispiel an einem Feldhäcksler oder an einem eine Ballenpresse ziehenden Traktor montiert. Mit Hilfe der Ultraschallsensoren kann die Höhe beispielsweise eines Stroh- oder Grünfutterschwades über dem Boden an bestimmten Punkten ermittelt werden, wodurch die Kontur des Schwades über dem Boden entlang einer horizontalen Linie abgetastet wird. Die dort beschriebene Vorrichtung hat jedoch einige Nachteile.

Die bekannte Abtastvorrichtung ist relativ teuer, da für die Abtastung mehrere Ultraschallsensoren notwendig sind.

Darüber hinaus besteht ein wesentlicher Nachteil darin, daß der Abstand der Ultraschallsensoren zueinander auf der Befestigungsleiste einen Mindestabstand nicht unterschreiten darf, da es ansonsten zu einer störenden, gegenseitigen Beeinflussung der Ultraschallsensoren aufgrund der unzureichenden Fokussierung der Schallkeulen kommt. Dies beschränkt jedoch die horizontale Auflösung (Dichte der Meßpunkte) der Konturabtastung. Darüber hinaus darf auch der Abstand der Ultraschallsensoren über dem Boden bzw. über der abzutastenden Kontur nicht zu groß werden (nicht größer als ca. 1,2 m), da es wegen der relativ großen Divergenz der Schallkeulen ebenfalls zu einer störenden, gegenseitigen Beeinflussung der Ultraschallsensoren kommt.

Eine derart niedrige Anbringungshöhe an der Landmaschine ist oftmals schon aus konstruktiven Gründen nur schwierig zu realisieren. Außerdem wird eine derart sperrige und in niedriger Höhe angebrachte Befestigungsleiste mit mehreren Ultraschallsensoren im Feldeinsatz sehr leicht beschädigt. Die Anbringungshöhe der Befestigungsleiste zu vergrößern ist jedoch nur möglich, wenn der Abstand der Ultraschallsensoren zueinander auf der Befestigungsleiste ebenfalls vergrößert wird, was wiederum eine geringere horizontale Auflösung (Quer zur Fahrtrichtung) der Schwad-Konturabtastung bedeutet.

Der Versuch den Mindestabstand der Ultraschallsensoren zueinander dadurch zu verringern, daß diese nicht gleichzeitig arbeiten, sondern benachbarte Sensoren abwechselnd messen, erfordert eine aufwendige Ansteuerschaltung für die einzelnen Ultraschallsensoren.

Für eine vorausschauende Konturabtastung wie sie beispielsweise für eine automatische Lenkung entlang der abgetasteten Schwadkontur notwendig wäre, müßte die Befestigungsleiste mit den Ultraschallsensoren in aufwendiger und umständlicher Weise an ein frontseitig an der Landmaschine angeordnetes und nach vorn verlängertes zusätzliches Haltegestänge montiert werden.

Ein weiterer Nachteil der bekannten Abtastvorrichtung besteht darin, daß die Genauigkeit und Zuverlässigkeit der Erntegut-Abtastung mittels Ultraschall stark von der Art und Beschaffenheit des Erntegutes und von Witterungsbedingungen abhängt.

Aufgabe der Erfindung ist es eine Vorrichtung an Landmaschinen zur berührungslosen Abtastung von sich über dem Boden erstreckenden Konturen zu schaffen, die die Nachteile der vorstehend beschriebenen Vorrichtung beseitigt.

Diese Aufgabe wird erfindungsgemäß durch die Merkmale des Patentanspruches 1 gelöst.

Erfindungsgemäß wird zur berührungslosen Abtastung von sich über dem Boden erstreckenden Konturen eine an sich bekannte Laser-Entfernungsmessvorrichtung bestehend aus einer Laserstrahlsende-/-empfangseinrichtung verwendet, die aus der Laufzeitmessung eines ausgesandten und an einem Konturpunkt reflektierten Laser-Abtaststrahles die Entfernung zu diesem bestimmt. Die Laser-Abtaststrahlen sind nun in einem bestimmten Winkelbereich schrittweise oder stufenlos in einer Abtaststrahlen-Ebene verschwenkbar. Dabei ist die Laser-Entfernungsmessvorrichtung so an der Landmaschine ausgerichtet angebracht ist, daß die Abtaststrahlen-Ebene in einem spitzen Winkel in Fahrtrichtung nach vorn zum Boden geneigt ist. Anhand einer Auswerteeinrichtung wird zu jedem Schwenkwinkel aus der gemessenen Entfernung, der Anordnung und Ausrichtung der Laser-Entfernungsmessvorrichtung an der Landmaschine die zu dem Schwenkwinkel korrespondierende Lage des Konturpunktes ermittelt und wobei die Auswerteeinrichtung der Laser-Abtastvorrichtung ein Signal von einem an der Landmaschine angebrachten Neigungssensor zur Bestimmung der Schieflagen der Landmaschine empfängt und die jeweilige Schieflage bei der Konturbestimmung berücksichtigt.

Die erfindungsgemäße Verwendung und Anordnung einer derartigen Laserentfernungsmeß-Vorrichtung hat gegenüber der aus dem Stand der Technik bekannten Abtastvorrichtung mittels Ultraschallsensoren erhebliche Vorteile.

Für die erfindungsgemäße Abtastvorrichtung ist nur eine Laserstrahlsende-/-empfangseinrichtung notwendig, dadurch ist diese Abtastvorrichtung an Landmaschinen im Vergleich zur bekannten Ultraschall-Abtastvorrichtung mit mehreren Ultraschallsensoren wesentlich kostengünstiger. Bei der erfindungsgemäßen Vorrichtung erfolgt die Abtastung einer Kontur vor der Landmaschine an verschiedenen Punkten quer zur Fahrtrichtung durch das Verschwenken des Laser-Abtaststrahles. Die Zahl der Abtastpunkte auf einer Abtastlinie ist dabei wesentlich größer als bei der vorbekannten

**EP 1 630 574 B1**

Ultraschall-Abtastvorrichtung. So ergibt sich beispielsweise bei einem Schwenkwinkelbereich von ± 45° und einer Verschwenkung des Laser-Abtaststrahl in 0,5° Schritten eine Zahl von 180 Abtastpunkten. Aufgrund der geringen Divergenz des Laser-Abtaststrahles ist eine relativ hohe Auflösung (Dichte der Abtastpunkte) zu erzielen, da die Zentren benachbarter Abtastpunkte dicht beieinander liegen können, ohne daß die Abtastflecken auf der abzutastenden Kontur überlappen und eine eindeutige Zuordnung des Reflektionsortes nicht mehr möglich wäre.

Eine gegenseitige Beeinflussung benachbarter Sensoren wie bei der vorbekannten Abtastvorrichtung entfällt, da die Entfernungen zu den Konturpunkten nacheinander ermittelt werden.

Eine weit vorausschauende Abtastung, wie sie zum Beispiel für eine automatische Lenkung entlang einer abgetasteten Kontur notwendig ist, ist mit der erfindungsgemäßen Vorrichtung in einfacher Weise zu realisieren. So ist beispielsweise bei einer Anbringungshöhe über dem Boden von 380 cm an der Landmaschine und einem Neigungswinkel (φ) zum Boden von 65° ein Abtastabstand vor der Landmaschine von ca. 8,15m zu erzielen. Aufgrund der geringen Divergenz des Laser-Abtaststrahles kommt es bei diesem relativ großen Abtastabstand nicht zu einer nicht akzeptierbaren Vergrößerung des Abtastfleckes wie im Fall der Ultraschallsensoren. Eine derart weit vorausschauende Konturabtastung ist mit der vorbekannten Ultraschall-Abtastvorrichtung nicht zu realisieren. Dies würde ein entsprechend langes Haltegestänge vor der Landmaschine zur Aufnahme der Befestigungsleiste für die Ultraschallsensoren erfordern, wodurch das ganze System vollkommen unpraktikabel würde.

Die Reflexion des Laser-Abtaststrahles ist im Unterschied zu Ultraschall relativ unabhängig von der witterungsbedingten Beschaffenheit des abzutastenden Erntegutes, wodurch die Einsatzmöglichkeiten der Laser-Abtastvorrichtung erhöht werden.

In einer Ausführungsform ist es vorgesehen, die Laserentfernungsmeß-Vorrichtung (LM) innerhalb der Fahrerkabine, hinter der Frontscheibe anzubringen. Staub auf der Scheibe kann aus den Signalen herausgefiltert werden und beeinträchtigt somit die Zuverlässigkeit der Abtastung nicht, die Scheibe selbst beeinträchtigt ebenfalls die Funktionstüchtigkeit nicht.

Die erfindungsgemäße Abtastvorrichtung ist aufgrund der hohen Genauigkeit, Zuverlässigkeit und aufgrund der einfachen Bauweise und Handhabung für die verschiedensten Anwendungen einsetzbar. Auf die verschieden Anwendungsverfahren der erfindungsgemäßen Vorrichtung beziehen sich die Verfahrensansprüche.

So ist es zum einen vorgesehen, während der Fahrt der Landmaschine fortlaufend entlang des zurückgelegten Weges, die Kontur über die Abtastbreite zu ermitteln und abzuspeichern. Hiermit kann die Kontur, von durch die Landmaschine aufzunehmenden Erntegutschwaden, sehr genau abgetastet und aufgezeichnet werden. An Hand der abgetasteten Kontur wird dann in einer Auswerteeinrichtung jeweils der Querschnitt des abgetasteten Erntegutschwades über der Bodengrundline ermittelt. Dabei kann der so bestimmte Schwadquerschnitt zur Einstellung der Fahrgeschwindigkeit der Landmaschine verwendet werden, wobei die Regelung beispielsweise auf konstante oder maximale Erntegutaufnahme eingestellt sein kann. Bei einem sich verkleinernden Schwadquerschnitt wird die Fahrgeschwindigkeit erhöht, so daß das pro Zeiteinheit aufgenommene Erntegut konstant ist. Wenn erntegutspezifische Dichteangaben vorliegen, so lassen sich diese ebenfalls mit dem ermittelten Schwadquerschnitt verknüpfen und in Verbindung mit einer ermittelten, überfahrenen Schwadstrecke, neben einer Volumenberechnung auch eine Gewichtsangabe, des während der Fahrt (online) aufgenommen Ernteguts, ermitteln. Darüber hinaus werden die so bestimmte schwadspezifischen Größen jeweils auch zur Einstellung von optimalen Arbeitsparametern der Erntemaschine verwendet.

In einer vorteilhaften Ausgestaltung der Erfindung, kann die innerhalb der Verschwenkzeit des Abtaststrahls ermittelte Vorfahrtstrecke der Landmaschine, mit in die Entfernungsmessung einbezogen werden.

In besonders vorteilhafter Weise wird zur Entlastung des Landmaschinenführers die abgetastete Schwadkontur, vorzugsweise die Schwadmitte, über bekannte Mittel während der Schwadaufnahme zur automatischen Lenkung der Landmaschine eingesetzt.

In Verbindung mit einem an der Landmaschine angeordneten Echtzeitortungssystem ist es möglich, über die gesamte Einsatzfläche und/oder über Teilflächenbereiche hinweg die abgetasteten Konturen jeweils terrestrischen Koordinaten (geographische Länge und Breite, ggf. Höhe über NN - bzw. kartesische Koordinaten (x,y) bezogen auf einen Punkt des Feldes) zuzuordnen. Dabei werden neben den schwadspezifischen Größen auch die Abstände zwischen benachbarten Schwaden ermittelt und aus diesen Flächendaten und/oder Ertragsdaten generiert. Diese werden dann zur weiteren Verwendung gespeichert.

Unter Verwendung eines Sensors an der Landmaschine, der die Schieflagen der Landmaschine beispielsweise beim Einsatz am Hang, beim Fahren in Senken oder über Bodenwellen ermittelt, kann, in Verbindung mit einem an der Landmaschine angeordnetem GPS-Ortungssystem, durch die Abtastung der Bodenkontur, unter Berücksichtigung der Landmaschinen-Schieflagen und -Position, ein hochgenaues, dreidimensionales Geländemodell der landwirtschaftlichen Nutzfläche erstellt werden. Die Schieflagen der Erntemaschine können auch für eine einfache Korrektur der Abtastentfernung benutzt werden.

Eine weitere Einsatzmöglichkeit der Laser-Abtastvorrichtung ist die Ermittlung des Abstandes einer Getreideährenoberfläche zur Erntemaschine. Dieses Signal wird zur Regelung der Schneidwerks-/ bzw. Haspelhöhe verwendet, wodurch eine erhebliche Entlastung des Fahrers erreicht wird. In diesem Einsatzfall können die ermittelten Abtastentfernungen weiter für die Ermittlung der tatsächlichen Schneidwerksauslastung herangezogen werden. Dafür werden die Schneidwerksgrenzen jeweils einem Schwenkwinkel der Laser-Abtastvorrichtung zugeordnet. Findet in diesem Schwenkbereich ein Kontursprung statt, so liegt an dieser Stelle eine Gutkante vor. Zwischen dieser ermittelten Gutkante und der von diesem am weitesten wegliegenden Schneidwerksgrenze läßt sich dann die Auslastung ermitteln.

Sollten durch Lagerstellen im Bestand mehrere Gutkantensprünge vorliegen, werden die jeweils äußeren Gutkantensprünge oder ein äußerer Gutkantensprung und eine der definierten Schneidwerksgrenze zur Schneidwerksauslastungsermittlung herangezogen. Dieser Auslastungswert kann dann über bekannte Mittel aufgezeichnet und/oder zur genaueren Flächenberechnung verwendet werden.

Eine weitere Einsatzmöglichkeit besteht in dem Abtasten von Fahrgassen, die durch vorhergehende Arbeitseinsätze (z.B. Saat und Ausbringen von Pflanzenschutzmitteln) in einem Erntegutbestand vorhanden sind, wobei anhand dieser abgetasteten Fahrgassen über bekannte Mittel eine automatische Lenkung der Erntemaschine durchgeführt wird.

Eine weitere vorteilhafte Verwendung der Laser-Abtastvorrichtung ist das Abtasten von Bearbeitungsspuren. Damit kann bei der Bearbeitung eine Zugmaschine über bekannte Mittel automatisch, entlang einer abgetasteten Spur gelenkt werden. Besonders geeignet ist diese Vorrichtung zum Abtasten von Spuren/ bzw. Furchen, wie sie beim Flügen entstehen. Vorteilhaft erweist sich dabei insbesondere der weite Erfassungsbereich der Vorrichtung. Bei einer Bearbeitungsrichtungsumkehr muß die Laser-Abtastvorrichtung nicht mechanisch verschwenkt, sondern lediglich das Regelsignal mit einem veränderten Offset versehen der automatischen Lenkeinrichtung zugeführt werden. Hierzu können beispielsweise an einem Pflug vorhandene Sensoren die Stellung des Pflugrahmens ermitteln und der Auswerte-/ bzw. Lenkreglereinrichtung mitteilen. Der Offset kann weiter per Hand und/oder durch eine Schieflagenermittlung der Landmaschine beeinflußbar sein.

In einer weiteren Ausgestaltung kann die Laser-Abtastvorrichtung bei Landmaschinen, die eine sich anschließende Bearbeitungsspur nur in der zuvor gewählten, gleichen Bearbeitungsrichtung zulassen (z.B.: Beetflug, Mähwerke), die Laser-Abtastvorrichtung direkt über der Fahrspur bzw. Bearbeitungskante an dem Bearbeitungsgerät oder dem Zugfahrzeug bzw. der Erntemaschine angebracht werden. Eine Umrechnung der ermittelten Spurposition oder ein Aufschalten eines Offsets kann dann entfallen.

Anhand der beigefügten Zeichnungen soll die Erfindung näher veranschaulicht werden. Es zeigt:

Fig. 1          die Seitenansicht eines Feldhäckslers mit Laser-Abtastvorrichtung,
Fig. 2          die Draufsicht auf einen Feldhäcksler mit Laser-Abtastvorrichtung zur Schwadabtastung,
Fig. 3          die dreidimensionale Darstellung einer mit der erfindungsgemäßen Vorrichtung abgetasteten Schwadkontur entlang der Fahrstrecke,
Fig.4           den Querschnitt eines abgetasteten Schwadquerschnittes über einem geneigten Boden,
Fig. 5          die Draufsicht auf verschiedene Schwade auf einer Wiese,
Fig. 6          ein Blockschaltbild der Auswerteeinrichtung mit ihren Eingangssignalen,
Fig. 7 bis Fig. 10     die geometrischen Verhältnisse der Laserstrahl- Abtastung.

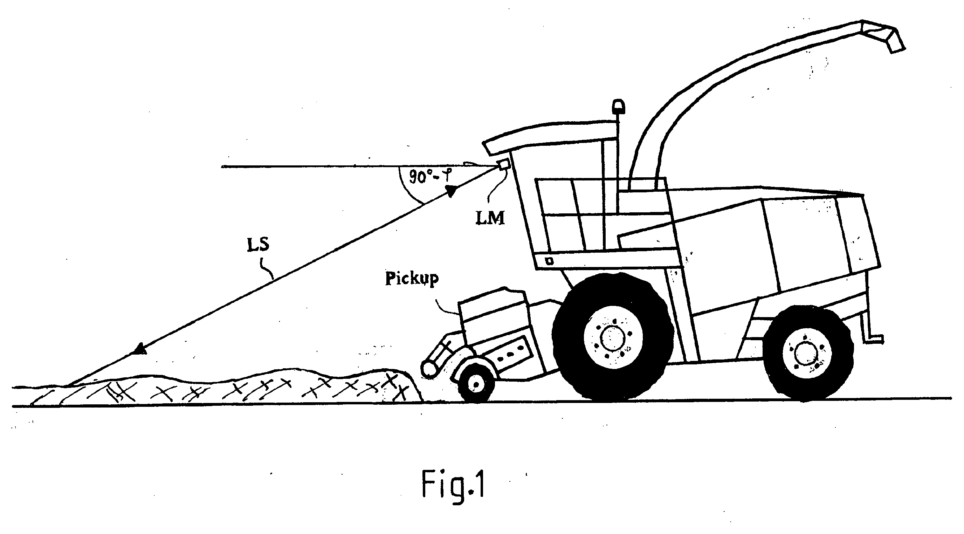

In Fig. 1 ist ein Feldhäcksler mit Pickup als Vorsatzgerät zur Aufnahme von im Schwad liegenden Erntegut gezeigt, an dem die Laserentfernungsmeß-Vorrichtung (LM) in Höhe der Fahrerkabine (ca. 3,80 m) unter einem Winkel von ca. 65° zum Boden geneigt angebracht ist (schematisch dargestellt). Damit ergibt sich ein Abtastabstand von ungefähr 8,15 m vor der Laserentfernungsmeß-Vorrichtung. Der Anbringungsort an der Landmaschine wird jeweils in Abhängigkeit von den baulichen Eigenarten der Landmaschine und den spezifischen Einsatzzwecken vorgegeben und sollte zur optimalen Konturerkennung möglichst hoch gewählt werden. Um eine hohe Einstell-Flexibilität zu erreichen, wird die Laserentfernungsmeß-Vorrichtung (LM) vorzugsweise höhen- und neigungsverstellbar an der Landmaschine montiert.

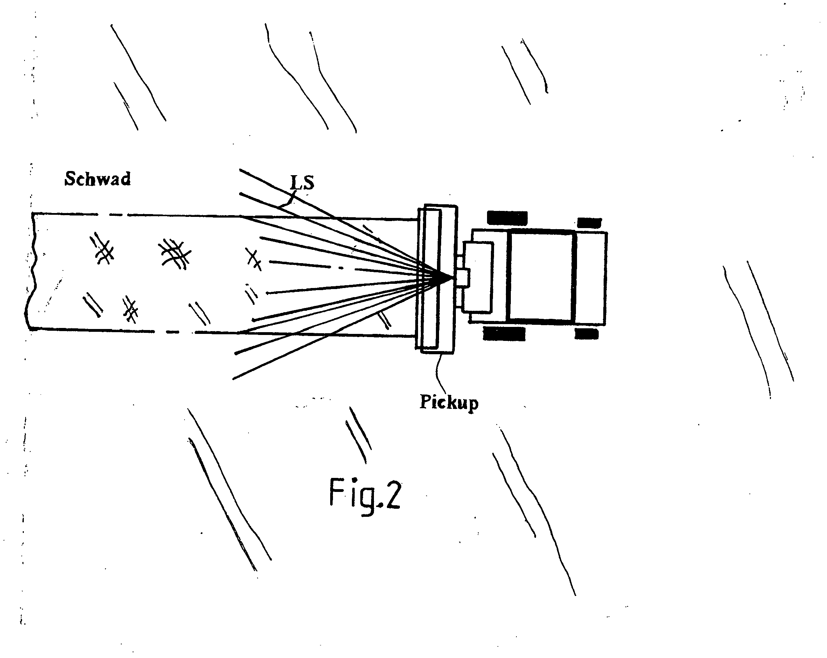

Zum besseren Verständnis ist in Fig. 2 eine Draufsicht auf den Feldhäcksler mit Pickup vor dem aufzunehmenden Schwad gezeigt. Die Laserentfernungsmeß-Vorrichtung (LM) befindet sich bezogen auf die Erstreckung des Feldhäckslers quer zur Fahrtrichtung in der Mitte der Maschine und tastet die Schwadkontur zu beiden Seiten der Landmaschinen-Längsrichtung symmetrisch ab.

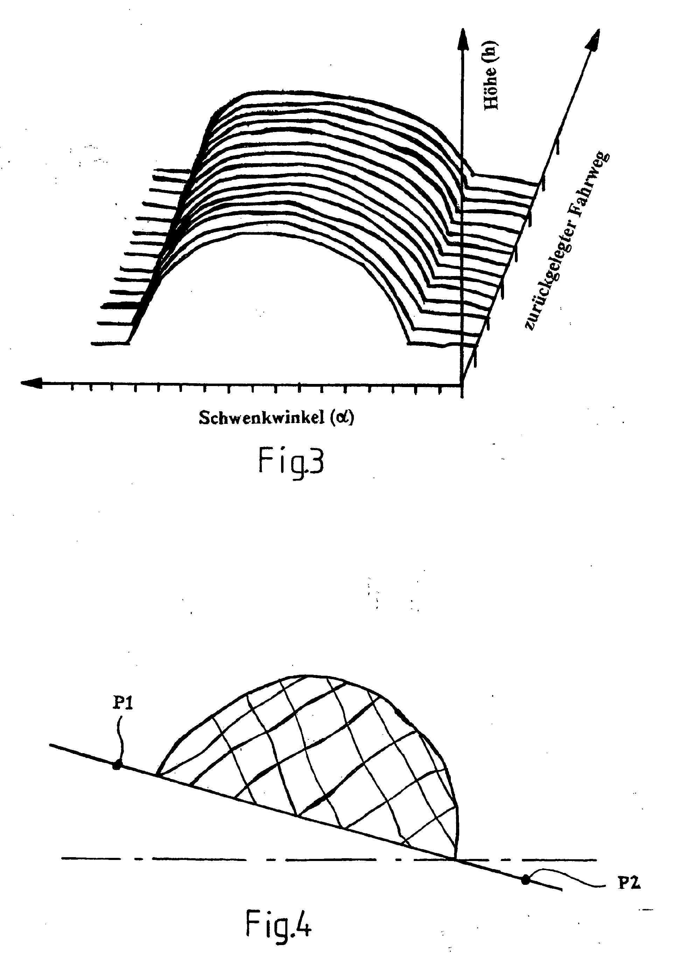

Fig. 3 zeigt schematisch eine dreidimensionale Darstellung der mit der Laserentfernungsmeß-Vorrichtung (LM) abgetasteten Schwadkontur entlang des zurückgelegten Fahrweges. Die Abstände der Konturlinien in Fahrtrichtung ergeben sich aus der Abtastfrequenz (Verschwenkzeit für den Laser-Abtaststrahl) und der Fahrgeschwindigkeit.

Fig. 4 zeigt eine abgetastete Schwadkontur über einer geneigten Bodengrundlinie (P1-P2). Unter Berücksichtigung des wahren, geneigten Verlaufes der Bodengrundlinie, die sich aus einer Interpolation der Bodenkonturen links und rechts neben dem Schwad ergibt, läßt sich gegenüber der Horizontalen eine genauere Berechnung des Schwadquerschnittes durchführen.

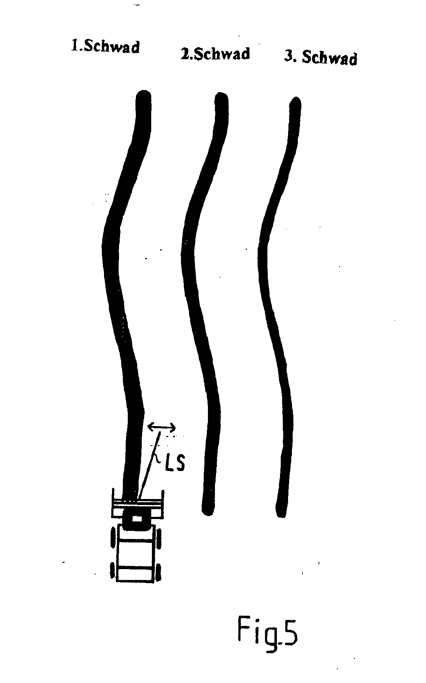

Fig. 5 zeigt eine Draufsicht auf einen Feldhäcksler bei der Aufnahme verschieden großer, benachbarter Erntegutschwaden.

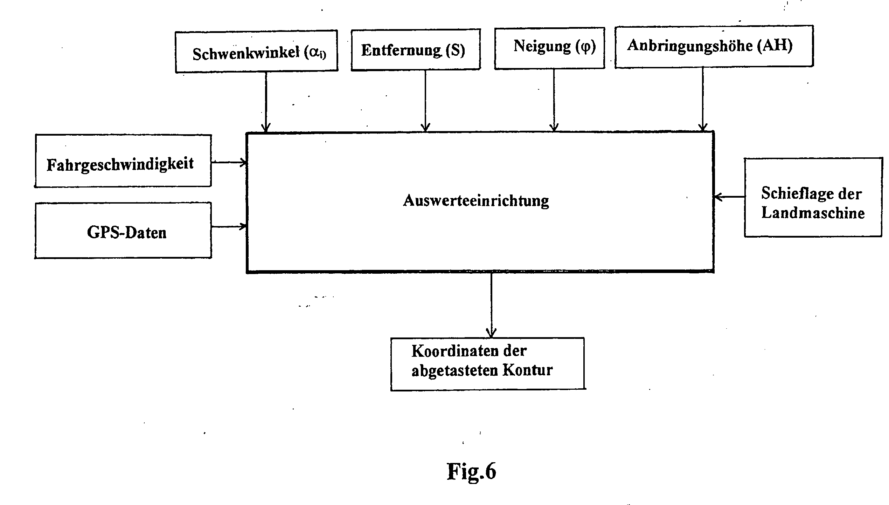

Fig. 6 zeigt ein Blockschaltbild der Auswerteeinrichtung zur Berechnung der abgetasteten Kontur-Koordinaten.

Als Eingangssignale empfängt die Auswerteeinrichtung die gemessene Entfernung (S) zu dem jeweils abgetasteten Konturpunkt, den Schwenkwinkel ($\alpha$) unter dem dieser Konturpunkt abgetastet wurde, sowie die Neigung ($\varphi$) und die Anbringungshöhe (AH) der Laserentfernungsmeß-Vorrichtung (LM). Aus diesen Daten errechnet die Auswerteeinrichtung dann die Kontur-Koordinaten. In vorteilhaften Ausführungsformen empfängt die Auswerteeinrichtung weitere Eingangssignale wie die Fahrgeschwindigkeit, GPS-Daten oder Informationen über die Schieflage der Landmaschine. Die Auswerteeinrichtung kann in die Laserentfernungsmeß-Vorrichtung (LM) integriert sein oder aber als eine oder mehrere separate Komponenten ausgeführt sein. Vorzugsweise ist die Auswerteeinrichtung mit dem zentralen Steuerungs- bzw. Fahrzeugbussystem der Landmaschine verbunden.

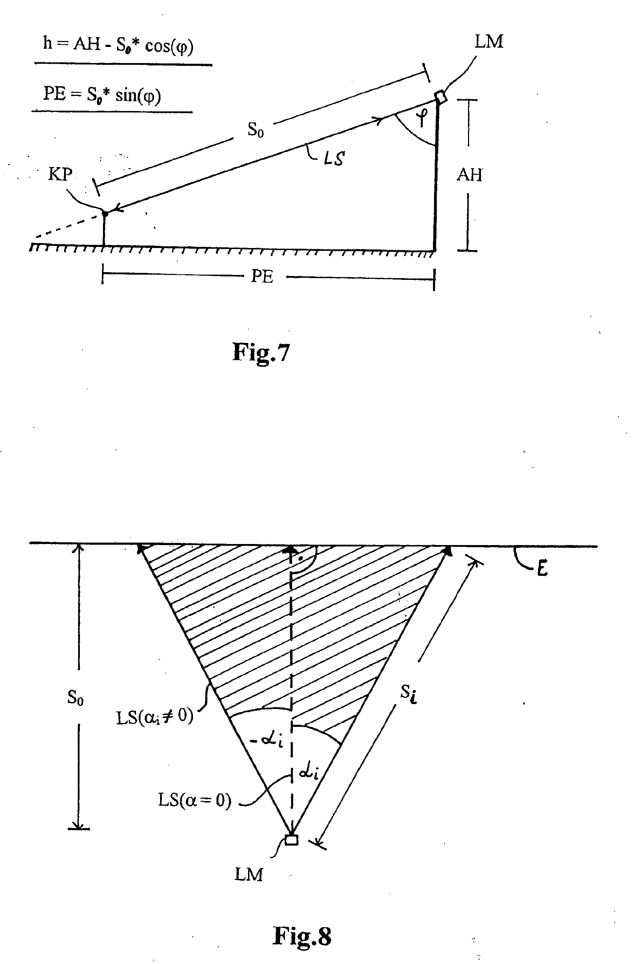

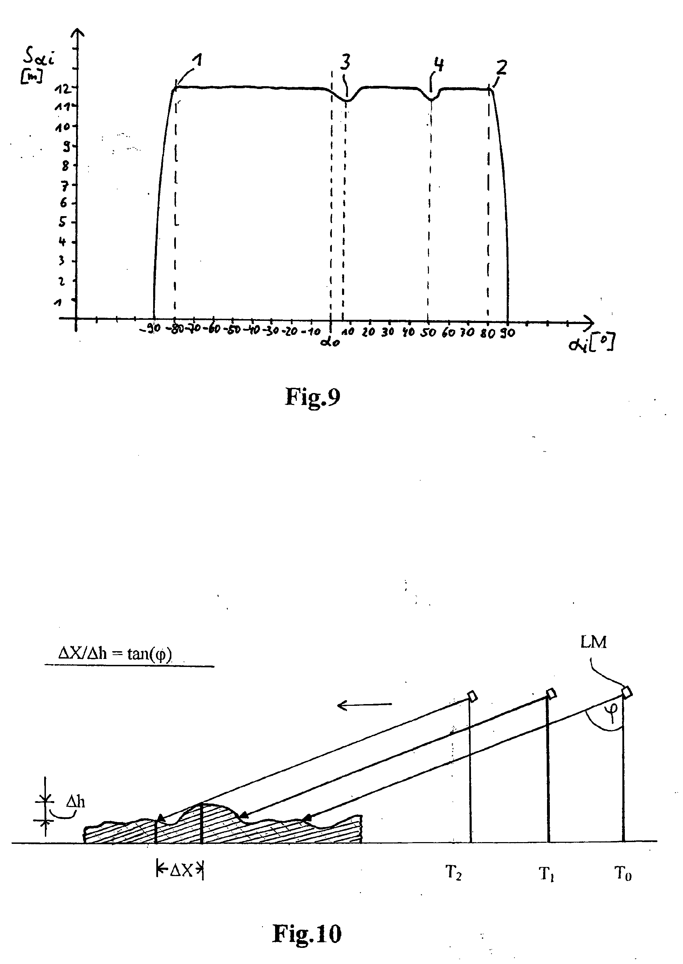

Zum besseren Verständnis zeigen die Figuren 7 und 10 die geometrischen Verhältnisse der Laserstrahl-Abtastung.

Dabei bedeutet:

AH:  die Anbringungshöhe der Laserentfernungsmeß-Vorrichtung an der Landmaschine über dem Boden,
$\varphi$:  den Neigungswinkel der Abtaststrahlen-Ebene zur Vertikalen,
h:  die Höhe des abgetasteten Konturpunktes über dem Boden,
PE:  die projizierte Entfernung zwischen der Laserentfernungsmeß-Vorrichtung und dem abgetasteten Konturpunkt,
S:  die gemessene Entfernung zwischen der Laserentfernungsmeß-Vorrichtung und einem abgetasteten Knotenpunkt,
$\alpha_i$ :  der i-te Schwenkwinkel des Laser-Abtaststrahles in der Abtaststrahlen-Ebene,
$S_0$:  die gemessene Entfernung für den Mittelpunktstrahl,
$S_i$:  die gemessene Entfernung für den um $\alpha_i$ verschwenkten Laser-Abtaststrahl,

In Fig. 7 sind die geometrischen Verhältnisse für den Mittelpunktstrahl ($\alpha = 0$) dargestellt. Die Höhe des abgetasteten Konturpunktes (KP) bestimmt sich aus der gemessenen Entfernung ($S_0$), der Anbringungshöhe (AH) und dem Neigungswinkel ($\varphi$) zu: $h = AH - S_0 \, x \cos(\varphi)$. Die auf den Boden projizierte Entfernung (PE) zu dem abgetasteten Konturpunkt (KP) bestimmt sich zu: $PE = S_0 \, x \sin(\varphi)$. Fig. 8 zeigt eine Draufsicht auf einen Konturverlauf (E). In diesem Verlauf sind keine Konturveränderungen enthalten. Die Entfernung (S) beschreibt hier den Abstand der Laserentfernungsmeß-Vorrichtung (LM), in Fahrtrichtung im ebenen Gelände, zum Boden.

Um Meßwerte für eine orthogonal zur Fahrtrichtung liegende Kontur (E) im Abstand ($S_0$), bei welcher der Mittelpunktsstrahl direkt zum Boden gemessen wird, zu erhalten, müssen die aus der Mittellage verschwenkten Abstandsmeßwerte LS($\alpha \neq 0$) umgerechnet werden. Die Umrechnungsformel lautet dafür: $S_{\varphi i} = S_i \, x \cos(\varphi_i)$.

Fig. 9 stellt ein Diagramm dar, in welchem Abstandswerte die wie nach Figur 8 korrigiert wurden, angezeigt werden. Der hier verwendete Abtaststrahl (LS) hat eine Reichweite von ca. 50m. An den Punkte (1) bzw. (2) wird die maximale Abtastweite überschritten und der Strahl wird nicht mehr reflektiert. Meßwerte außerhalb diesen Schwenkbereichs sind daher ungültig. Aus der Berechnung ergibt sich dann außerhalb des gültigen Bereichs jeweils ein Cosinusverlauf bis an den Abtastendanschlag.

An den Stellen (3) und (4) wurden jeweils eine kürzere Abtastweite des Abtaststrahls ermittelt. An diese Stellen liegen Erhöhungen in der Kontur vor. Sie zeigen jeweils die Lage und den Querschnitt eines Schwades an. Der Schwad an der Stelle (3) liegt etwas seitlich von der Mitte der Erntemaschinenfahrtrichtung. Die Schwadmitte kann ermittelt und bezogen auf den Mittelpunktstrahl zur automatischen Lenkung einer Landmaschine verwendet werden.

An der Stelle (4) wird ein weiterer Schwad dargestellt. Über die jeweils ermittelten Winkellagen der beiden Schwadmittelpunkte, kann der Abstand der Schwaden ermittelt und in Verbindung mit den schwadspezifischen Größen (Länge, Querschnittsfläche, Dicht) einer Ernteflächenermittlung bzw. einer Ertragskartierung zugeführt werden.

In Fig. 10 ist ein Längsschnitt durch einen Schwadausschnitt gezeigt. Es werden drei hintereinander folgende Meßpunkte dargestellt. Dabei wird der zugehörige Schwenkwinkel $\alpha$ nicht berücksichtigt. Aufgrund von Höhenunterschieden im Schwad ergeben sich Abschattungen des Laser-Abtaststrahles (LS). Mit folgendem Zusammenhang wird die maximal noch abtastbaren Änderung in der Konturhöhe ($\Delta h$) bei einem gewissen Abstand ($\Delta X$) der abgetasteten Konturpunkte in Fahrtrichtung beschrieben. Sie lautet: $\Delta h = \Delta X / \tan(\varphi)$.

Ist beispielsweise durch eine Fahrgeschwindigkeit von v= 10km/h und einer Schwenkwinkelfrequenz 25Hz (Abtastfrequenz) ein Abtastabstand von $\Delta X$=11,1 cm vorgegeben, so ergibt sich bei einem Neigungswinkel von $\varphi$=65° ein maximaler, abtastbarer Höhenunterschied von $\Delta h$=5,2cm. Ein derartiger Wert ist für die verfahrensgemäßen Anwendungen voll ausreichend.

**EP 1 630 574 B1**

**Patentansprüche**

1. Vorrichtung an Landmaschinen zur berührungslosen Abtastung von sich über den Boden erstreckenden Konturen, **gekennzeichnet durch**,
eine Laserentfernungsmeß-Vorrichtung (LM) bestehend einer Laserstrahlsende/empfangseinrichtung, die aus der Laufzeitmessung des ausgesandten und an einem Konturpunkt reflektierenden Laser-Abtaststrahls (LS) die Entfernung zu diesem bestimmt, wobei
der Laser-Abtaststrahl (LS) in einem bestimmten Winkelkreis schrittweise oder stufenlos in einer Abtaststrahlen-Ebene verschwenkbar ist,
die Lasterentfernungsmeß-Vorrichtung (LM) so an der Landmaschine ausgerichtet angebracht ist, dass die Abtaststrahlen-Ebene in einem spitzen Winkel ($\varphi$).in Fahrtrichtung nach von zum Boden geneigt ist,
eine Auswerteeinrichtung vorgesehen ist, die zu jedem Schwenkwinkel ($\alpha$) aus der gemessenen Entfernung (S), der Anordnung und Ausrichtung der Laserentfernungsmeß-Vorrichtung (LM) an der Landmaschine die zu dem Schwenkwinkel korrespondierenden Lage des Konturpunktes ermittelt und wobei die Auswerteeinrichtung der Laser Abtastvorrichtung ein Signal von einem der der Landmaschine angebrachten Neigungssensor zur Bestimmung der Schieflagen der Landmaschine empfängt und die jeweilige Schieflage bei der Konturbestimmung berücksichtigt.

2. Vorrichtung nach Anspruch 1,
**dadurch gekennzeichnet, daß**
die Laserentfernungsmeß-Vorrichtung (LM) neigungsverstellbar an der Landmaschine befestigt ist, so daß unterschiedliche Neigungen des Laser-Abtaststrahles (LS) zum Boden einstellbar sind.

3. Verfahren zur Konturabtastung mit einer Vorrichtung nach den Ansprüchen 1 bis 2,
**dadurch gekennzeichnet, daß**
während der Fahrt der Landmaschine fortlaufend aus den ermittelten Entfernungswerten die Kontur über die Abtastbreite ermittelt und gespeichert wird.

4. Verfahren nach Anspruch 3,
**dadurch gekennzeichnet, daß**
aus der Kontur und/oder aus der Summen von aneinanderfolgenden Konturen eine von der Landmaschine zu verfolgende Spur ermittelt wird.

5. Verfahren nach den Ansprüchen 3 und 4,
**dadurch gekennzeichnet,**
**dass** die ermittelte Spur über Mittel zur automatischen Lenkung einer Landmaschine entlang dieser Spur dient.

6. Verfahren nach den Ansprüchen 3 bis 5,
**dadurch gekennzeichnet, daß**
das für die automatische Lenkung generierte Signal, durch einen Offset, der per Hand und/oder von den Schieflagen der Landmaschine und/oder durch eine Arbeitsrichtungserkennung beeinflußbar ist, so angepaßt wird, daß ein Parallelversatz zwischen der ermittelteten Spur und dem Mittelpunktstrahls möglich ist.

7. Verfahren nach den Ansprüchen 3 bis 6,
**dadurch gekennzeichnet, daß**
der Verlauf der Bodengrundlinie unter einem abgetasteten Erntegutschwad durch Abtasten der nicht mit Schwad bedeckten Bodengrundlinie zu beiden Seiten des Erntegutschwades ermittelt wird und zur genaueren Bestimmung des Schwadquerschnittes herangezogen wird.

8. Verfahren zur Konturabtastung mit einer Vorrichtung nach Anspruch 1,
**dadurch gekennzeichnet,**
**dass** die Bodenkontur einer landwirtschaftlichen Nutzfläche zur Erstellung eines hoch genauen dreidimensionalen Geländemodelle abgetastet wird, wobei die jeweils abgetasteten Konturpunkte des Bodens über ein an der Landmaschine angeordnetes Echtzeitortungssystem unter Berücksichtigung mindestens einer Landmaschinen-Schieflage terrestrischen Koordinaten zugeordnet ist.

9. Verfahren zur Konturabtastung mit einer Vorrichtung nach Anspruch 1,
**dadurch gekennzeichnet, daß**
die Ährenoberfläche eines Getreidefeldes abgetastet wird und die ermittelte Kontur zur Regelung der Schneidwerkshöhe und/oder der Haspelhöhe und/oder der Ermittlung der Schneidwerksauslastung dient.

10. Verfahren zur Konturabtastung mit einer Vorrichtung nach Anspruch 1
**dadurch gekennzeichne**t, **daß**
die während der Verschwenkzeit des Abtaststrahls ermittelten Entfernung jeweils um das überfahrene Streckenstück korrigiert wird.

**Claims**

1. Apparatus on agricultural machines for contactlessly scanning contours extending over the ground, **characterised by**
a laser distance measuring device (LM) comprising a laser beam emitting/receiving device which determines the distance in relation to a contour point from the transit time measurement of the laser scanning beam (LS) which is emitted and reflected at the contour point, wherein
the laser scanning beam (LS) is pivotable stepwise or steplessly in a scanning beam plane in a given angular circle, the laser distance measuring device (LM) is mounted in oriented relationship to the agricultural machine in such a way that the scanning beam plane is inclined forwardly in the direction of travel relative to the ground at an acute angle ($\varphi$), and
there is provided an evaluation device which at each pivotal angle ($\alpha$) ascertains from the measured distance (S), the arrangement and orientation of the laser distance measuring device (LM) on the agricultural machine the position of the contour point corresponding to the pivotal angle and wherein the evaluation device of the laser scanning device receives a signal from an inclination sensor mounted to the agricultural machine for determining the sloping positions of the agricultural machine and takes account of the respective sloping position in determining the contour.

2. Apparatus according to claim 1 **characterised in that** the laser distance measuring device (LM) is fixed adjustably in inclination to the agricultural machine so that different inclinations of the laser scanning beam (LS) can be set relative to the ground.

3. A method of contour scanning with an apparatus according to claims 1 and 2 **characterised in that** during the travel of the agricultural machine the contour is continuously ascertained from the ascertained distance values over the scanning width and stored.

4. A method according to claim 3 **characterised in that** a track to be followed by the agricultural machine is ascertained from the contour and/or from the sums of consecutive contours.

5. A method according to claims 3 and 4 **characterised in that** the ascertained track serves by way of means for automatically steering an agricultural machine along said track.

6. A method according to claims 3 to 5 **characterised in that** the signal generated for automatic steering can be so adapted by an offset which can be influenced by hand and/or by the sloping positions of the agricultural machine and/or by a working direction recognition step that parallel displacement is possible between the ascertained track and the centre point beam.

7. A method according to claims 3 to 6 **characterised in that** the configuration of the ground base line under a scanned crop material swathe is ascertained by scanning the ground base line which is not covered with swathe at both sides of the crop material swathe and is used for more accurately determining the swathe cross-section.

8. A method of contour scanning with an apparatus according to claim 1 **characterised in that** the ground contour of an agricultural usable surface is scanned for producing a highly accurate three-dimensional terrain model, wherein the respectively scanned contour points of the ground is associated with terrestrial co-ordinates by way of a real-time locating system arranged on the agricultural machine having regard to at least one agricultural machine sloping position.

9. A method of contour scanning with an apparatus according to claim 1 **characterised in that** the ear surface of a cornfield and the ascertained contour serves for regulation of the cutting mechanism height and/or the drum height and/or for ascertaining the cutting mechanism loading.

**10.** A method of contour scanning with an apparatus according to claim 1 **characterised in that** the distance ascertained during the pivotal time of the scanning beam is respectively corrected by the path distance travelled.

**Revendications**

**1.** Dispositif sur machines agricoles pour le palpage sans contact de contours s'étendant sur le sol, **caractérisé par** un dispositif de mesure de distance par laser (LM) composé d'un dispositif d'émission/réception d'un faisceau laser qui, à partir de la mesure du temps de parcours du faisceau laser de palpage (LS) émis et réfléchi sur un point du contour, détermine la distance par rapport à celui-ci, le faisceau laser de palpage (LS) pouvant pivoter dans une plage angulaire définie par pas ou en continu dans un plan de faisceau de palpage, le dispositif de mesure de distance par laser (LM) étant monté et orienté sur la machine agricole de façon que le plan de faisceau de palpage soit incliné selon un angle aigu ($\varphi$) par rapport au sol vers l'avant dans la direction de marche, un dispositif d'analyse étant prévu, lequel détermine pour chaque angle de pivotement ($\alpha$), à partir de la distance (S) mesurée, de la disposition et de l'orientation du dispositif de mesure de distance par laser (LM) sur la machine agricole, la position du point de contour correspondant à l'angle de pivotement, et le dispositif d'analyse du dispositif de palpage par laser recevant un signal d'un capteur d'inclinaison monté sur la machine agricole pour déterminer l'inclinaison de la machine agricole et tenant compte de l'inclinaison respective dans la détermination du contour.

**2.** Dispositif selon la revendication 1, **caractérisé en ce que** le dispositif de mesure de distance par laser (LM) est fixé sur la machine agricole de manière réglable en inclinaison, de sorte que différentes inclinaisons du faisceau laser de palpage (LS) par rapport au sol sont réglables.

**3.** Procédé de palpage de contours avec un dispositif selon les revendications 1 à 2, **caractérisé en ce que**, pendant la marche de la machine agricole, le contour est déterminé et enregistré de façon continue sur la largeur de palpage à partir des valeurs de distance déterminées.

**4.** Procédé selon la revendication 3, **caractérisé en ce qu'**une trace à suivre par la machine agricole est déterminée à partir du contour et/ou des sommes de contours successifs.

**5.** Procédé selon les revendications 3 et 4, **caractérisé en ce que** la trace déterminée sert, par l'intermédiaire de moyens, au guidage automatique d'une machine agricole le long de cette trace.

**6.** Procédé selon les revendications 3 à 5, **caractérisé en ce que** le signal généré pour le guidage automatique est adapté par le biais d'un décalage modulable manuellement et/ou par l'inclinaison de la machine agricole et/ou par une détection de la direction de travail, de sorte qu'un décalage parallèle entre la trace déterminée et le faisceau central est possible.

**7.** Procédé selon les revendications 3 à 6, **caractérisé en ce que** le tracé de la ligne de base du sol sous un andain de produit de récolte palpé est déterminé par palpage de la ligne de base du sol non recouverte par l'andain des deux côtés de l'andain de produit de récolte et est utilisé pour déterminer plus précisément la section transversale de l'andain.

**8.** Procédé de palpage de contours avec un dispositif selon la revendication 1, **caractérisé en ce que** le contour de sol d'une surface cultivable est palpé pour élaborer un modèle de terrain tridimensionnel de haute précision, les points de contour palpés du sol étant associés à des coordonnées terrestres au moyen d'un système de localisation en temps réel, disposé sur la machine agricole, en tenant compte d'au moins une inclinaison de la machine agricole.

**9.** Procédé de palpage de contours avec un dispositif selon la revendication 1, **caractérisé en ce que** la surface des épis d'un champ de céréales est palpée et le contour enregistré est utilisé pour réguler la hauteur de la barre de coupe et/ou la hauteur du rabatteur et/ou pour connaître la charge de la barre de coupe.

**10.** Procédé de palpage de contours avec un dispositif selon la revendication 1, **caractérisé en ce que** la distance enregistrée pendant le temps de pivotement du faisceau de palpage est chaque fois corrigée du tronçon parcouru.

Fig.1

EP 1 630 574 B1

Fig.2

Höhe (h)

zurückgelegter Fahrweg

Schwenkwinkel (α)

Fig.3

P1

P2

Fig.4

EP 1 630 574 B1

1.Schwad    2.Schwad    3. Schwad

LS

Fig.5

12

| Schwenkwinkel ($\alpha_i$) | Entfernung (S) | Neigung ($\varphi$) | Anbringungshöhe (AH) |
|---|---|---|---|

| Fahrgeschwindigkeit | |
|---|---|
| GPS-Daten | Auswerteeinrichtung |

Schieflage der Landmaschine

Koordinaten der abgetasteten Kontur

**Fig.6**

$$h = AH - S_0 * \cos(\varphi)$$

$$PE = S_0 * \sin(\varphi)$$

LM

$S_0$

LS

$\varphi$

AH

KP

PE

**Fig.7**

E

$S_0$

LS($\alpha_i \neq 0$)

$-\alpha_i$

$S_i$

LS($\alpha = 0$)

$\alpha_i$

LM

**Fig.8**

Fig.9

$$\Delta X/\Delta h = \tan(\varphi)$$

Fig.10

15

**IN DER BESCHREIBUNG AUFGEFÜHRTE DOKUMENTE**

**In der Beschreibung aufgeführte Nicht-Patentliteratur**

- Schwadabtastung mit Ultraschall. *Zeitschrift: Landtechnik,* vol. 5-93, 266-268